# EUROPÄISCHE PATENTSCHRIFT

(11) **EP 1 135 285 B1**
(45) Veröffentlichungstag und Bekanntmachung des Hinweises auf die Patenterteilung: **12.05.2004**
(21) Anmeldenummer: 99972990.8
(22) Anmeldetag: 04.10.1999
(51) Int. Cl.: B60S 1/08

(54) **VORRICHTUNG ZUR DETEKTION VON PARTIKELN AUF EINER WINDSCHUTZSCHEIBE**
DEVICE FOR DETECTING PARTICLES ON A WINDSHIELD
DISPOSITIF PERMETTANT DE DETECTER DES PARTICULES SUR UN PARE-BRISE

(30) Priorität: 28.11.1998 DE 19855041
(43) Veröffentlichungstag der Anmeldung: 26.09.2001
(73) Patentinhaber: Valeo Wischersysteme GmbH, 74321 Bietigheim-Bissingen (DE)
(72) Erfinder: BAYHA, Heiner, D-71739 Oberriexingen (DE); BENZ, Jürgen, D-74354 Besigheim (DE); PHILIPPS, Werner, D-71638 Ludwigsburg (DE)
(74) Vertreter: Jahn, Wolf-Diethart
(86) Internationale Anmeldenummer: PCT/EP1999/007327
(87) Internationale Veröffentlichungsnummer: WO 2000/032453

(56) Entgegenhaltungen:
- DE-A- 4 006 420
- DE-A- 4 123 641
- DE-A- 4 329 983
- US-A- 4 636 643
- US-A- 5 313 072

## Beschreibung

Die vorliegende Erfindung betrifft eine Vorrichtung zur Detektion von Partikeln auf einer Windschutzscheibe eines Kraftfahrzeugs, mit einer Strahlenquelle, die optische Strahlen auf die Scheibe aussendet, mit einem Strahlenempfänger, der einen Teil der auf die Scheibe ausgesandten Strahlen empfängt, und mit einer Steuerungseinheit, die die von dem Strahlenempfänger empfangenen Strahlen auswertet, wobei die Strahlenquelle außerhalb des Blickfeldes eines Fahrers des Kraftfahrzeugs optischen Strahlen der Strahlenquelle im Bereich des Blickfeldes auf die Scheibe treffen, und daß der Strahlenempfänger auf den Bereich der Scheibe ausgerichtet ist, auf den die Strahlen der Strahlenquelle treffen.

Als Partikel im Sinne dieser Erfindung werden sowohl Flüssigkeitstropfen (z. B. Wasserdampf, Regen) als auch kleine Festkörperpartikel (z. B. Staub, Sandkörner, Eiskristalle, Schnee, Hagel) verstanden. Partikel sind demnach all das, was die Sicht durch die Scheibe eines Kraftfahrzeuges beeinträchtigen kann.

Aus der DE-A-4 123 641 sind ein Verfahren und eine Vorrichtung zur automatischen Regelung des Scheibenwischermotors in Abhängigkeit von der Regenstärke bekannt. Die Erkennung der Regenstärke erfolgt aus der Art und Stärke der Modulation eines auf die Tropfen aufgestrahlten Lichtes durch die auf der Windschutzscheibe vibrierenden Tropfen. Voraussetzung für diese Vorgehensweise ist, dass die Strahlenquelle Gleichlichtstrahlen aussendet.

Aus dem Stand der Technik sind weitere Vorrichtungen zur Detektion von Partikeln auf einer Windschutzscheibe in unterschiedlichen Ausführungsformen bekannt. Sie liegen üblicherweise bündig auf der Windschutzscheibe im Inneren des Kraftfahrzeuges an. Der Bereich zwischen der Strahlenquelle und dem Strahlenempfänger der Vorrichtung und der Windschutzscheibe wird mit einem Kontaktmaterial ausgefüllt, das eine ähnliche optische Dichte wie das Glas der Windschutzscheibe aufweist. Die Strahlenquelle sendet optische Strahlen auf die Windschutzscheibe aus. Neben der Strahlenquelle ist der Strahlenempfänger angeordnet, der entweder diejenigen Strahlen empfängt, die von den Partikeln auf der Scheibe gestreut wurden, oder aber die Strahlen, die von der Scheibe reflektiert und nicht von den Partikeln gestreut wurden. Die Steuerungseinheit wertet die von dem Strahlenempfänger empfangenen Strahlen aus. Dabei bestimmt sie beispielsweise, um welche Art von Partikeln es sich handelt, und wieviele dieser Partikel auf der Windschutzscheibe angeordnet sind. Die Steuerungseinheit kann auch geeignete Maßnahmen ergreifen, diese Partikel von der Windschutzscheibe zu entfernen. Die Maßnahmen umfassen bspw. die Aktivierung eines Scheibenwischers oder einer Scheibenwaschanlage.

Bei den bekannten Vorrichtungen ist es nachteilig, daß die Vorrichtungen bündig auf der Windschutzscheibe angebracht sind und die optischen Strahlen innerhalb der Windschutzscheibe verlaufen. Dadurch können nämlich nur Partikel auf der Außenseite der Windschutzscheibe detektiert werden. Partikel auf der Innenseite der Windschutzscheibe können nämlich üblicherweise nicht zwischen die Vorrichtung und die Windschutzscheibe eindringen und deshalb von den bekannten Vorrichtungen auch nicht detektiert werden. Außerdem weist das Kontaktmaterial, das zwischen der Vorrichtung und der Windschutzscheibe eingebracht wird, nicht genau die gleiche optische Dichte wie das Glas der Windschutzscheibe auf. Deshalb werden die optischen Strahlen beim Übergang von dem Kontaktmaterial in die Windschutzscheibe und umgekehrt stets ein wenig gebrochen, wodurch die Auswerteergebnisse der Vorrichtung verfälscht werden können. Schließlich erweist es sich bei den bekannten Vorrichtungen als nachteilig, daß sie außerhalb des Blickfelds des Fahrers des Kraftfahrzeugs angeordnet sind. Sie werden üblicherweise am oberen Rand der Windschutzscheibe angeordnet, der gerade noch von einem Scheibenwischer überstrichen wird. Die Auswerteergebnisse der Vorrichtung betreffen also einen Bereich außerhalb des Blickfelds des Fahrers. Bei einer unregelmäßigen Verteilung von Partikeln auf der Windschutzscheibe kann es deshalb vorkommen, daß auf dem Bereich der Windschutzscheibe, auf dem die Vorrichtung angeordnet ist, keine Partikel angeordnet sind, die Vorrichtung demnach auch keine Partikel detektieren kann und geeignete Maßnahmen zum Entfernen von Partikeln von der Windschutzscheibe nicht ergriffen werden, obwohl im Blickfeld des Fahrers eine Vielzahl von Partikeln angeordnet sind, die die Sicht beeinträchtigen. Die bekannte Vorrichtung kann nicht einfach im Blickfeld des Fahrers angeordnet werden, da sie sonst die Sicht des Fahrers beeinträchtigen würde.

Aus den vorgenannten Nachteilen des Standes der Technik ergibt sich die Aufgabe der Erfindung, eine Vorrichtung zur Detektion von Partikeln auf einer Windschutzscheibe eines Kraftfahrzeugs bereitzustellen, bei der die Art der Partikel mit großer Sicherheit ermittelt werden kann, ohne daß die Vorrichtung im Blickfeld des Fahrers angeordnet wird.

Diese Aufgabe wird durch eine Vorrichtung gemäß dem Patentanspruch 1 gelöst.

Bei dieser Vorrichtung ist die Strahlenquelle außerhalb des Blickfelds eines Fahrers des Kraftfahrzeugs angeordnet und derart ausgerichtet ist, daß die optischen Strahlen der Strahlenquelle im Bereich des Blickfelds auf die Scheibe treffen, und der Strahlenempfänger ist auf den Bereich der Scheibe ausgerichtet, auf den die Strahlen der Strahlenquelle treffen.

Das Blickfeld ist der Bereich der Windschutzscheibe, auf den der Fahrer des Kraftfahrzeugs bei einem Blick auf die vor dem Fahrzeug liegende Fahrbahn blickt. Das Blickfeld entspricht in etwa dem Bereich der Scheibe, der von Scheibenwischern zum Entfernen der auf der Außenseite der Scheibe angeordneten Partikeln überstrichen wird. Die erfindungsgemäße Vorrichtung zur Detektion von Partikeln erfasst einen wesentlich größeren Scheibenbereich als ein bündig auf der Scheibe befestigter Sensor.

Die erfindungsgemäße Vorrichtung kann außerhalb des Blickfelds des Fahrers angeordnet sein. Die Sicht des Fahrers wird nicht durch eine in seinem Blickfeld angeordnete Vorrichtung beeinträchtigt. Dennoch kann mittels der erfindungsgemäßen Vorrichtung das Blickfeld des Fahrers oder eine andere ausreichend große repräsentative Fläche überwacht werden. Auf diese Weise können Partikel im Blickfeld des Fahrers zuverlässig detektiert werden. Die optischen Strahlen treffen vorzugsweise in einem ähnlichen Winkel auf die Scheibe, wie der Blick des Fahrers auf die Scheibe trifft. Auf diese Weise können genau die Partikel detektiert werden, die zu einer Beeinträchtigung der Sicht des Fahrers durch die Scheibe führen.

Die Trennung von Anordnung der Vorrichtung im Kraftfahrzeug und zu überwachendem Bereich wird dadurch ermöglicht, daß die erfindungsgemäße Vorrichtung von der bisher üblichen Bauart abweicht und nicht mehr, wie bisher üblich, bündig auf der Scheibe aufgebracht ist. Vielmehr ist zwischen der Strahlenquelle und der Scheibe und zwischen dem Strahlenempfänger und der Scheibe eine Luftstrecke ausgebildet.

Die erfindungsgemäße Vorrichtung hat den weiteren Vorteil, daß sich auch im Innenraum des Kraftfahrzeugs Partikel auf dem Bereich der Scheibe absetzen können, in dem die optischen Strahlen der Strahlenquelle treffen, und auf den der Strahlenempfänger ausgerichtet ist. Ebenso wie die Partikel auf der Außenseite der Scheibe können auch diese Partikel auf der Innenseite der Scheibe von der erfindungsgemäßen Vorrichtung detektiert werden.

Um bei einer Vorrichtung nach der DE-A-4 123 641 die Art der Partikel sicher bestimmen zu können, ist erfindungsgemäß vorgesehen, daß die Steuerungseinheit die Strahlenquelle ansteuert, um die ausgesendeten Strahlen derart zu variieren, daß sie in Abhängigkeit von der Art der Partikel zu charakteristischen Reflexionen durch die entsprechenden Partikel führen und aus den von dem Strahlenempfänger empfangenen Strahlen die Art der Partikel bestimmt werden kann. Auf diese Weise können je nach Bedarf unterschiedliche Maßnahmen ergriffen werden, um die entsprechenden Partikel von der Scheibe zu entfernen. Bei Schmutz oder Staub auf der Außenseite der Scheibe sollte zunächst die Scheibenwaschanlage und danach ein Scheibenwischer aktiviert werden, um die Partikel von der Scheibe entfernen zu können, ohne sie zu verkratzen. Bei Regen, Schnee oder Hagel genügt es, lediglich einen Scheibenwischer zu aktivieren. Wenn sich an der Innenseite der Scheibe feinste Flüssigkeitströpfchen ausbilden, der sog. Beschlag, dann kann die Lüftung und evtl. auch die Heizung des Kraftfahrzeuginnenraums aktiviert werden.

Um eine Unterscheidung der Art der Partikel auf der Scheibe zu ermöglichen und um feststellen zu können, ob die Partikel auf der Außen- oder auf der Innenseite der Scheibe angeordnet sind, sendet die Strahlenquelle optische Strahlen mit unterschiedlicher Frequenz aus. Zudem kann die Intensität der Strahlen variiert werden. Außerdem kann die Strahlenquelle auch Strahlenimpulse unterschiedlicher Dauer aussenden. Alle diese unterschiedlichen optischen Strahlen führen abhängig von der Art der Partikel zu charakteristischen Reflexionen durch die entsprechenden Partikel. Durch eine geeignete Auswertung der von den Partikel reflektierten und von dem Strahlenempfänger empfangenen Strahlen durch die Steuerungseinheit kann somit die Art der Partikel mit hoher Genauigkeit bestimmt werden.

Gemäß einer vorteilhaften Weiterbildung der vorliegenden Erfindung ist die Strahlenquelle als eine Light-Emitting-Diode (LED) ausgebildet.

Der Strahlenempfänger weist vorzugsweise mehrere Empfangseinheiten auf. Die Empfangseinheiten sind vorteilhafterweise als optoelektronische Arrays wie z. B. Charge-Coupled-Devices (CCD)-Bildwandler ausgebildet.

In der Ausbreitungsrichtung der von den Partikeln reflektierten Strahlen sind gemäß einer vorteilhaften Weiterbildung der Erfindung vor den Empfangseinheiten Mittel zum Bündeln der Strahlen angeordnet. Die Mittel zum Bündeln der Strahlen sind vorzugsweise als Linsenelemente ausgebildet.

Die Strahlenquelle sendet vorzugsweise optische Strahlen mit einer Wellenlänge von etwa 350 nm bis 800 nm. Diese optischen Strahlen liegen im Bereich des für das menschliche Auge sichtbaren Lichts. Durch die Verwendung von optischen Strahlen in diesem Frequenzbereich können Partikel auf der Scheibe des Fahrzeugs besonders zuverlässig detektiert werden. Es können aber auch Strahlenquellen verwendet werden, die Strahlen mit einer Wellenlänge im Infrarotbereich aussenden.

Alternativ oder zusätzlich schlägt die Erfindung gemäß einer vorteilhaften Weiterbildung vor, daß die Steuerungseinheit die von dem Strahlenempfänger empfangenen Strahlen mittels geeigneter Algorithmen auswertet, so daß die Art der Partikel bestimmt werden kann.

Gemäß einer bevorzugten Ausführungsform der Erfindung ist die Vorrichtung integraler Bestandteil eines Innenraumlichtmoduls eines Kraftfahrzeuges. Dadurch kann die erfindungsgemäße Vorrichtung für den Fahrer unauffällig außerhalb seines Blickfeldes angeordnet werden. Dennoch ist die Vorrichtung derart angeordnet, daß die optischen Strahlen der Strahlenquelle das Blickfeld des Fahrers auf der Scheibe ungehindert erreichen können. Außerdem fallen die optischen Strahlen bei einer derart angeordneten Vorrichtung in einem ähnlichen Blickwinkel auf die Scheibe wie der Blick des Fahrers.

Alternativ wird vorgeschlagen, daß die erfindungsgemäße Vorrichtung integraler Bestandteil eines Innenraumspiegelmoduls eines Kraftfahrzeuges ist.

Es ergeben sich besondere Vorteile, wenn die erfindungsgemäße Vorrichtung über einen bidirektionalen Datenbus mit einer übergeordneten Steuerungseinheit des Kraftfahrzeugs verbunden ist. Auf diese Weise können die Auswerteergebnisse der Vorrichtung der Steuerungseinheit zugeführt und dort verarbeitet werden. So kann die Steuerungseinheit bspw. bei dichtem Regen oder starkem Schneetreiben eine Begrenzung der möglichen Höchstgeschwindigkeit des Kraftfahrzeugs oder die Aktivierung der Fahrzeugbeleuchtung veranlassen.

Eine bevorzugte Ausführungsform der vorliegenden Erfindung wird im folgenden anhand der Zeichnungen näher erläutert. Es zeigen:
Fig. 1 einen schematische Ansicht einer erfindungsgemäßen Vorrichtung; und
Fig. 2 eine Seitenansicht einer erfindungsgemäßen Vorrichtung gemäß einer ersten Ausführungsform.

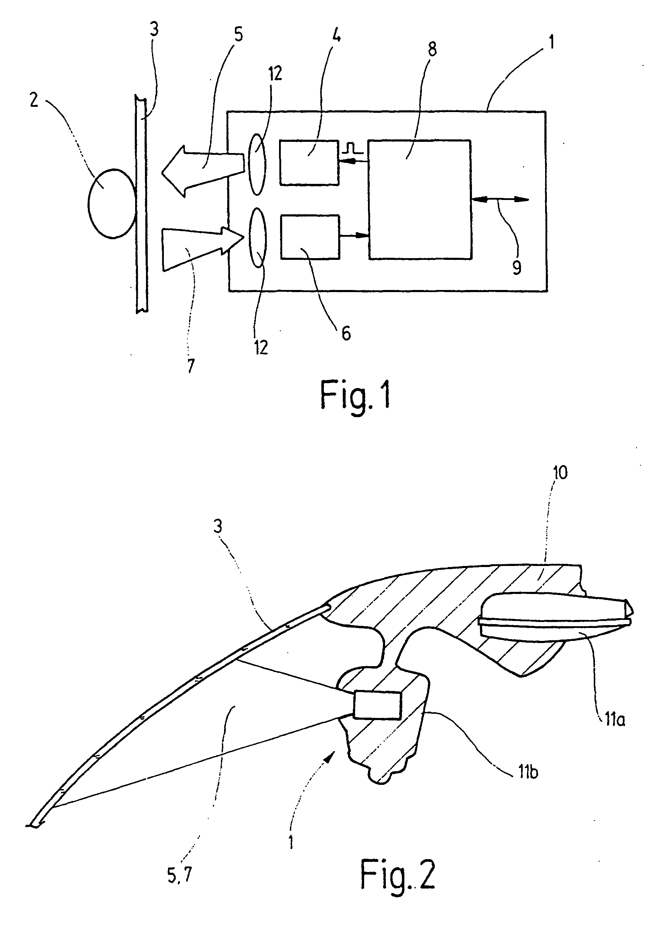

In Fig. 1 ist die erfindungsgemäße Vorrichtung in ihrer Gesamtheit mit dem Bezugszeichen 1 gekennzeichnet. Die Vorrichtung 1 dient zur Detektion von Partikeln 2 auf einer Windschutzscheibe 3 eines Kraftfahrzeugs 10 (vgl. Fig. 2). Die Vorrichtung 1 weist eine Strahlenquelle 4 auf, die optische Strahlen 5 auf die Scheibe 3 aussendet. Die Strahlenquelle 4 ist als eine Light-Emitting-Diode (LED) ausgebildet. Außerdem weist die Vorrichtung 1 einen Strahlenempfänger 6 auf, der die von den Partikeln 2 auf der Scheibe 3 reflektierten Strahlen 7 empfängt. Der Strahlenempfänger 6 ist als ein Charge-Coupled-Devices (CCD)-Bildwandler ausgebildet. Schließlich weist die Vorrichtung 1 eine Steuerungseinheit 8 auf, die die Strahlenquelle 4 über Steuersignale 9 ansteuert und die die von dem Strahlenempfänger 6 empfangenen Strahlen 7 auswertet. In Ausbreitungsrichtung der Strahlen 5 nach der Strahlenquelle 4 und in Ausbreitungsrichtung der Strahlen 7 vor dem Strahlenempfänger 6 sind Mittel 12 zum Bündeln der Strahlen 5, 7 angeordnet. Die Mittel 12 zum Bündeln der Strahlen 5, 7 sind als Linsenelemente ausgebildet. Die erfindungsgemäße Vorrichtung 1 ist über einen bidirektionalen Datenbus 9 mit einer übergeordneten Steuerungseinheit (nicht dargestellt) des Kraftfahrzeugs 10 verbunden.

In Fig. 2 ist ein Ausschnitt des Innenraums eines Kraftfahrzeugs 10 dargestellt. Im Dach des Kraftfahrzeugs 10 ist eine Einheit 11 aus Innenraumlichtmodul 11a und Innenraumspiegelmodul 11b angeordnet. Die erfindungsgemäße Vorrichtung 1 ist integraler Bestandteil dieser Einheit 11. Die Vorrichtung 1 ist außerhalb des Blickfelds des Fahrers (nicht dargestellt) des Kraftfahrzeugs 10 angeordnet und behindert die Sicht des Fahrers auf die Fahrbahn vor dem Kraftfahrzeug 10 nicht. Die optischen Strahlen 5 der Strahlenquelle 4 können ungehindert auf das Blickfeld des Fahrers auf der Windschutzscheibe 3 des Kraftfahrzeugs 10 treffen und die von den Partikeln 2 auf der Scheibe 3 reflektierten Strahlen 7 können ungehindert zu dem Strahlenempfänger 6 gelangen.

## Patentansprüche

1. Vorrichtung (1) zur Detektion von Partikeln (2) auf einer Windschutzscheibe (3) eines Kraftfahrzeugs (10), mit einer Strahlenquelle (4), die optische Strahlen (5) auf die Scheibe (3) aussendet, mit einem Strahlenempfänger (6), der einen Teil der auf die Scheibe (3) ausgesandten Strahlen (5) empfängt, und mit einer Steuerungseinheit (8), die die von dem Strahlenempfänger (6) empfangenen Strahlen (7) auswertet, wobei die Strahlenquelle (4) außerhalb des Blickfelds eines Fahrers des Kraftfahrzeugs (10) angeordnet und derart ausgerichtet ist, daß die optischen Strahlen (5) der Strahlenquelle (4) im Bereich des Blickfelds auf die Scheibe (3) treffen, und dass der Strahlenempfänger (6) auf den Bereich der Scheibe (3) ausgerichtet ist, auf den die Strahlen (5) der Strahlenquelle (4) treffen, **dadurch gekennzeichnet, dass** die Steuerungseinheit (8) die Strahlenquelle (4) ansteuert, um die ausgesendeten Strahlen (5) derart zu variieren, dass sie in Abhängigkeit von der Art der Partikel zu charakteristischen Reflexionen durch die entsprechenden Partikel führen und aus den von dem Strahlenempfänger (6) empfangenen Strahlen (7) die Art der Partikel, wie Schmutz oder Staub bzw. Regen, Schnee oder Hagel auf der Außenseite der Windschutzscheibe (3) bzw. sich an der Innenseite der Windschutzscheibe (3) ausbildende feinste Flüssigkeitströpfchen, bestimmt werden kann.

2. Vorrichtung (1) nach Anspruch 1, **dadurch gekennzeichnet, daß** die Strahlenquelle (4) als eine Light-Emitting-Diode (LED) ausgebildet ist.

3. Vorrichtung (1) nach Anspruch 1 oder 2, **dadurch gekennzeichnet, daß** der Strahlenempfänger (6) mehrere Empfangseinheiten aufweist.

4. Vorrichtung (1) nach Anspruch 3, **dadurch gekennzeichnet, daß** die Empfangseinheiten als optoelektronische Arrays wie z. B. Charge-Coupled-Devices (CCD)-Bildwandler ausgebildet sind.

5. Vorrichtung (1) nach Anspruch 3 oder 4, **dadurch gekennzeichnet, daß** in der Ausbreitungsrichtung der von den Partikeln (2) reflektierten Strahlen (7) vor den Empfangseinheiten Mittel (12) zum Bündeln der Strahlen angeordnet sind.

6. Vorrichtung (1) nach Anspruch 5, **dadurch gekennzeichnet, daß** die Mittel (12) zum Bündeln der Strahlen als Linsenelemente ausgebildet sind.

7. Vorrichtung (1) nach einem der Ansprüche 1 bis 6, **dadurch gekennzeichnet, daß** die Strahlenquelle (4) optische Strahlen (5) mit einer Wellenlänge von etwa 350 nm bis 800 nm aussendet.

8. Vorrichtung (1) nach einem der Ansprüche 1 bis 6, **dadurch gekennzeichnet, daß** die Strahlenquelle (4) optische Strahlen (5) mit einer Wellenlänge im Infrarotbereich aussendet.

9. Vorrichtung (1) nach einem der Ansprüche 1 bis 8, **dadurch gekennzeichnet, daß** die Steuerungseinheit (8) die von dem Strahlenempfänger (4) empfangenen Strahlen (7) mittels geeigneter Algorithmen auswertet, so daß die Art der Partikel (2) bestimmt werden kann.

10. Vorrichtung (1) nach einem der Ansprüche 1 bis 9, **dadurch gekennzeichnet, daß** die Vorrichtung (10) integraler Bestandteil eines Innenraumlichtmoduls des Kraftfahrzeuges (10) ist.

11. Vorrichtung (1) nach einem der Ansprüche 1 bis 9, **dadurch gekennzeichnet, daß** die Vorrichtung (10) integraler Bestandteil eines Innenraumspiegelmoduls des Kraftfahrzeuges (10) ist.

12. Vorrichtung (1) nach einem der Ansprüche 1 bis 11, **dadurch gekennzeichnet, daß** die Vorrichtung (1) über einen bidirektionalen Datenbus (9) mit einer übergeordneten Steuerungseinheit des Kraftfahrzeugs (10) verbunden ist.

## Claims

1. Device (1) for detection of particles (2) on a windscreen (3) of a motor vehicle (10), with a beam source (4) which emits optical beams (5) onto the screen (3), with a beam receiver (6) which receives part of the beams (5) emitted onto the screen (3), and with a control unit (8) which analyses the beams (7) received by the beam receiver (6), where the beam source (4) is arranged outside the field of vision of a driver of the motor vehicle (10) and aligned such that the optical beams (5) of the beam source (4) hit the screen (3) in the area of the field of vision, and that the beam receiver (6) is aligned to the area of the screen (3) hit by the beams (5) of the beam source (4), **characterised in that** the control unit (8) controls the beam source (4) in order to vary the beams (5) emitted such that, as a function of the nature of the particles, they lead to characteristic reflections by the corresponding particles, and from the beams (7) received by the beam receiver (6) the nature of the particles can be determined such as dirt, dust, rain, snow or hail on the outside of the windscreen (3) or ultrafine liquid droplets forming on the inside of the windscreen (3).

2. Device (1) according to claim 1, **characterised in that** the beam source (4) is formed as a light emitting diode (LED).

3. Device (1) according to claim 1 or 2, **characterised in that** the beam receiver (6) has several receiver units.

4. Device (1) according to claim 3, **characterised in that** the receiver units are formed as optoelectronic arrays, e.g. charge coupled device (CCD) image sensors.

5. Device (1) according to claim 3 or 4, **characterised in that** in the propagation direction of the beams (7) reflected by the particles (2), means are arranged in front of the receiver units (12) for focussing the beams.

6. Device (1) according to claim 5, **characterised in that** the means (12) for focussing the beams are formed as lens elements.

7. Device (1) according to any of claims 1 to 6, **characterised in that** the beam source (4) emits optical beams (5) with a wavelength of around 350 nm to 800 nm.

8. Device (1) according to any of claims 1 to 6, **characterised in that** the beam source (4) emits optical beams with a wavelength in the infrared range.

9. Device (1) according to any of claims 1 to 8, **characterised in that** the control unit (8) analyses the beams (7) received by the beam receiver (6) using suitable algorithms so that the nature of the particles (2) can be determined.

10. Device (1) according to any of claims 1 to 9, **characterised in that** the device (1) is an integral part of an interior light module of a motor vehicle (10).

11. Device (1) according to any of claims 1 to 9, **characterised in that** the device (1) is an integral part of an interior mirror module of a motor vehicle (10).

12. Device (1) according to any of claims 1 to 11, **characterised in that** the device (1) is connected with a general control unit of the motor vehicle (10) by means of a bidirectional data bus (9).

## Revendications

1. Dispositif (1) de détection de particules (2) sur un pare-brise (3) d'un véhicule automobile (10), comprenant une source de rayonnement (4), qui émet des rayons optiques (5) sur le pare-brise (3), un récepteur de rayons (6), qui reçoit une partie des rayons (5) émis sur le pare-brise (3), et une unité de commande (8) qui analyse les rayons (7) reçus par le récepteur de rayons (6), la source de rayonnement (4) étant agencée en dehors du champ de vision d'un conducteur du véhicule automobile (10) et étant orientée de telle sorte que les rayons (5) optiques de la source de rayonnement (4) sont projetés sur le pare-brise (3) dans la zone du champ de vision, et le récepteur de rayons (6) étant orienté vers la zone du pare-brise (3) sur laquelle sont projetés les rayons (5) de la source de rayonnement (4), **caractérisé en ce que** l'unité de commande (8) active la source de rayonnement (4) pour que les rayons (5) émis soient modulés de telle sorte que, en fonction de la nature des particules, ils sont réfléchis de manière caractéristique par les particules correspondantes et que la nature des particules, telles que des saletés ou la poussière, ou bien la pluie, la neige ou la grêle, présentes sur la face extérieure du pare-brise (3) ou des petites gouttelettes de liquide se formant sur la face intérieure du pare-brise (3), peut être déterminée à partir des rayons (7) reçus par le récepteur de rayons (6).

2. Dispositif (1) selon la revendication 1, **caractérisé en ce que** la source de rayonnement (4) est conçue sous forme de diode électroluminescente (LED).

3. Dispositif (1) selon la revendication 1 ou 2, **caractérisé en ce que** le récepteur de rayons (6) comporte plusieurs unités de réception.

4. Dispositif (1) selon la revendication 3, **caractérisé en ce que** les unités de réception sont réalisées sous forme de systèmes optoélectroniques, tels que des convertisseurs d'images CCD (dispositifs à couplage de charge).

5. Dispositif (1) selon la revendication 3 ou 4, **caractérisé en ce que** des moyens (12) destinés à focaliser les rayons sont agencés en amont des unités de réception dans la direction de propagation des rayons (7) réfléchis par les particules (2).

6. Dispositif (1) selon la revendication 5, **caractérisé en ce que** les moyens (12) destinés à focaliser les rayons sont conçus sous forme d'éléments à lentille.

7. Dispositif (1) selon l'une quelconque des revendications 1 à 6, **caractérisé en ce que** la source de rayonnement (4) émet des rayons (5) optiques avec une longueur d'onde de 350 nm à 800 nm environ.

8. Dispositif (1) selon l'une quelconque des revendications 1 à 6, **caractérisé en ce que** la source de rayonnement (4) émet des rayons (5) optiques avec une longueur d'onde dans le domaine de l'infrarouge.

9. Dispositif (1) selon l'une quelconque des revendications 1 à 8, **caractérisé en ce que** l'unité de commande (8) analyse au moyen d'algorithmes appropriés les rayons (7) captés par le récepteur de rayons (6), de manière à pouvoir déterminer la nature des particules (2).

10. Dispositif (1) selon l'une quelconque des revendications 1 à 9, **caractérisé en ce que** le dispositif (1) est une partie intégrante d'un module d'éclairage de l'habitacle du véhicule (10).

11. Dispositif (1) selon l'une quelconque des revendications 1 à 9, **caractérisé en ce que** le dispositif (1) est une partie intégrante d'un module de miroir de courtoisie du véhicule (10).

12. Dispositif (1) selon l'une quelconque des revendications 1 à 11, **caractérisé en ce que** le dispositif (1) est relié via un bus de données (9) bidirectionnel avec une unité de commande (8) prioritaire du véhicule (10).
